# EUROPEAN PATENT SPECIFICATION

(11) **EP 3 208 312 B1**
(45) Date of publication and mention of the grant of the patent: **17.08.2022**
(21) Application number: 14903980.2
(22) Date of filing: 29.12.2014
(51) Int. Cl.: C08L 69/00, C08L 33/04, C08K 5/521, C08K 7/14

(54) **THERMOPLASTIC RESIN COMPOSITION HAVING EXCELLENT TRANSPARENCY AND MECHANICAL STRENGTH, AND MOLDED PRODUCT COMPRISING SAME**
THERMOPLASTISCHE HARZZUSAMMENSETZUNG MIT HERVORRAGENDER TRANSPARENZ UND MECHANISCHER FESTIGKEIT SOWIE GEFORMTES PRODUKT DAMIT
COMPOSITION DE RÉSINE THERMOPLASTIQUE AYANT UNE EXCELLENTE TRANSPARENCE ET RÉSISTANCE MÉCANIQUE, ET PRODUIT MOULÉ LA COMPRENANT

(30) Priority: 13.10.2014 KR 20140137810
(43) Date of publication of application: 23.08.2017
(73) Proprietor: Lotte Advanced Materials Co., Ltd., Jeollanam-do 59616 (KR)
(72) Inventor: KIM, Pil Ho, Uiwang-si Gyeonggi-do 437-711 (KR); SHIN, Seung Shik, Uiwang-si Gyeonggi-do 437-711 (KR); CHIN, Kyuong Sik, Gyeonggi-Do, 16073 (KR)
(74) Representative: Germain Maureau
(86) International application number: PCT/KR2014/012971
(87) International publication number: WO 2016/060333

(56) References cited:
- WO-A1-2009/078593
- KR-A- 20100 069 889
- KR-A- 20110 000 440
- KR-A- 20120 100 523
- US-A1- 2010 316 860
- US-A1- 2013 137 801
- US-A1- 2013 237 650
- US-A1- 2014 256 861

## Description

### [Technical Field]

The present invention relates to a thermoplastic resin composition and a molded article including the same. More particularly, the present invention relates to a thermoplastic resin composition which has excellent properties in terms of transparency and mechanical strength such as impact resistance and flexural modulus, and a molded article including the same.

### [Background Art]

Polycarbonate resins have been applied to electric/electronic products, automobile parts, lenses, glass substitute materials, and the like due to excellent mechanical strength such as impact resistance and flexural modulus, thermal stability, self-extinguishing properties, dimensional stability and heat resistance. However, when applied to products requiring transparency, a polycarbonate resin exhibits considerably poor scratch resistance, as compared with glass, and suffers from yellowing when exposed to sunlight for a long time.

In order to improve scratch resistance of a polycarbonate resin, a method of alloying a polymethyl methacrylate (PMMA) resin with a polycarbonate (PC) resin has been attempted. However, such a PC/PMMA resin composition has low compatibility between the resins and a large difference in index of refraction between the resins and thus can exhibit poor properties in terms of transparency, appearance quality, and impact resistance.

Therefore, there is a need for a thermoplastic resin composition which has excellent properties in terms of transparency and mechanical strength such as impact resistance and flexural modulus and thus can be applied to products requiring transparency such as transparent exterior materials for electric/electronic products.

One example of the related art is disclosed in Korean Patent Publication No. 10-2012-0055277.

### [Disclosure]

### [Technical Problem]

It is one object of the present invention to provide a thermoplastic resin composition which has excellent properties in terms of transparency and mechanical strength such as impact resistance and flexural modulus, and a molded article including the same.

It is another object of the present invention to provide a thermoplastic resin composition which is environmentally friendly without causing generation of halogen gas, and a molded article including the same.

The above and other objects of the present invention can be achieved by the present invention described below.

### [Technical Solution]

One aspect of the present invention relates to a thermoplastic resin composition. The thermoplastic resin composition includes: about 100 parts by weight of a polycarbonate resin; about 10 parts by weight to about 140 parts by weight of a (meth)acrylic resin represented by Formula 1; about 10 parts by weight to about 80 parts by weight of an aromatic phosphoric acid ester compound; and about 10 parts by weight to about 110 parts by weight of glass fibers, wherein a difference in index of refraction between the glass fibers and a resin mixture comprising the polycarbonate resin, the (meth)acrylic resin, and the aromatic phosphoric acid ester compound is about 0.02 or less.

### [Formula 1]

Thermoplastic resins are inter alia disclosed in the US 2010/316860 and WO 2009/078593. 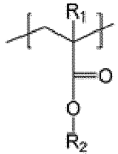 wherein R₁ is a hydrogen atom, a methyl group or an ethyl group and R₂ is a substituted or unsubstituted C₆ to C₂₀ aryl group.

In exemplary embodiments, the (meth)acrylic resin may contain about 1 wt% to about 90 wt% of a repeat unit represented by Formula 1 and about 10 wt% to about 99 wt% of a repeat unit represented by Formula 2.

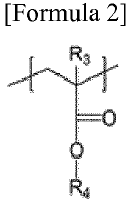

wherein R₃ is a hydrogen atom, a methyl group or an ethyl group and R₄ is a linear, branched or cyclic C₁ to C₁₀ alkyl group.

In exemplary embodiments, the polycarbonate resin may have a weight average molecular weight of about 10,000 g/mol to about 200,000 g/mol and an index of refraction of about 1.57 to about 1.60 and the (meth)acrylic resin may have a weight average molecular weight of about 5,000 g/mol to about 300,000 g/mol and an index of refraction of about 1.495 to about 1.590.

In exemplary embodiments, the aromatic phosphoric acid ester compound may be represented by Formula 3. 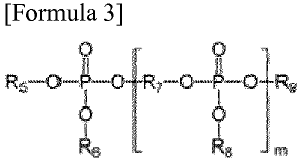 wherein R₅ and R₉ are each independently a substituted or unsubstituted C₆ to C₂₀ aryl group; R₆ and R₈ are each independently a substituted or unsubstituted C₆ to C₂₀ aryl or aryloxy group; R₇ is a derivative (excluding alcohol) of dialcohols of resorcinol, hydroquinone, bisphenol-A, or bisphenol-S; and m is an integer of 0 to 10.

In exemplary embodiments, the glass fibers may have an index of refraction of about 1.51 to about 1.59.

In exemplary embodiments, a difference in index of refraction between the resin mixture and the glass fibers may range from about 0.001 to about 0.010.

In exemplary embodiments, the thermoplastic resin composition may have a total luminous transmittance of about 80% or higher and a haze of about 10% or less, as measured on an about 1.0 mm thick specimen in accordance with ASTM D1003.

In exemplary embodiments, the thermoplastic resin composition may have an Izod impact strength of about 3 kgf·cm/cm to about 15 kgf·cm/cm, as measured on an about 1/8" thick specimen in accordance with ASTM D256, a flexural modulus of about 40,000 kgf/cm² to about 70,000 kgf/cm², as measured on an about 6.4 mm thick specimen in accordance with ASTM D790, and a coefficient of linear thermal expansion of about 20 µm/(m°C) to about 60 µm/(m°C), as measured in accordance with ASTM D696.

Another aspect of the present invention relates to a molded article. The molded article is formed of the thermoplastic resin composition as set forth above.

In exemplary embodiments, the molded article may be a transparent exterior material.

### [Advantageous Effects]

According to the present invention, it is possible to provide a thermoplastic resin composition which has excellent properties in terms of transparency and mechanical strength such as impact resistance and flexural modulus and is environmentally friendly without causing generation of halogen gas, and a molded article including the same.

### [Best Mode]

Hereinafter, embodiments of the present invention will be described in detail.

A thermoplastic resin composition according to the present invention includes (A) 100 parts by weight of a polycarbonate resin, (B) about 10 parts by weight to about 140 parts by weight of a (meth)acrylic resin, (C) about 10 parts by weight to about 80 parts by weight of an aromatic phosphoric acid ester compound, and (D) about 10 parts by weight to about 110 parts by weight of glass fibers, wherein a difference in index of refraction between the glass fibers and a resin mixture including the polycarbonate resin, the (meth)acrylic resin, and the aromatic phosphoric acid ester compound is about 0.02 or less.

### (A) Polycarbonate resin

The polycarbonate resin according to the present invention may include any typical carbonate resin without limitation. For example, the polycarbonate resin may be a polycarbonate resin prepared by reacting diphenols with phosgene, a halogen acid ester, a carbonic ester or a combination thereof.

Examples of the diphenols may include hydroquinone, resorcinol, 4,4'-biphenol, 2,2-bis(4-hydroxyphenyl)propane, 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and mixtures thereof, without being limited thereto. For example, the diphenols may be 2,2-bis(4-hydroxyphenyl)propane, 2,2-bis(3,5-dichloro-4-hydroxyphenyl)propane, or 1,1-bis(4-hydroxyphenyl)cyclohexane, specifically 2,2-bis(4-hydroxyphenyl)propane.

In exemplary embodiments, the polycarbonate resin may be a mixture of copolymers prepared from two or more different diphenols and may be a linear polycarbonate resin, a branched polycarbonate resin, or a polyester carbonate copolymer resin. Examples of the linear polycarbonate resin may include bisphenol-A polycarbonate resin and the like. Examples of the branched polycarbonate resin may include polycarbonate resins prepared by reacting polyfunctional aromatic compounds such as trimellitic anhydride and trimellitic acid with diphenols and carbonates. Here, the polyfunctional aromatic compound may be included in an amount of about 0.05 mol% to about 2 mol% based on the total amount of the branched polycarbonate resin. In addition, examples of the polyester carbonate copolymer resin may include polyester carbonate copolymer resins prepared by reacting a bifunctional carboxylic acid with diphenols and carbonates (carbonic esters). Here, as the carbonates, ethylene carbonate and diaryl carbonate such as diphenyl carbonate may be used.

In exemplary embodiments, the polycarbonate resin may have a weight average molecular weight (Mw) of about 10,000 g/mol to about 200,000 g/mol, for example, about 15,000 g/mol to about 80,000 g/mol, as measured by gel permeation chromatography (GPC). Within this range, the thermoplastic resin composition can have excellent properties in terms of mechanical strength such as impact resistance and flexural modulus.

In exemplary embodiments, the polycarbonate resin may have an index of refraction of about 1.57 to about 1.60, for example, about 1.58 to about 1.59, as measured in accordance with ASTM D542. Within this range, it is possible to obtain a thermoplastic resin composition which is excellent in transparency and mechanical strength such as impact resistance and flexural modulus by adjusting a weight ratio of the polycarbonate resin to the (meth)acrylic resin based on the index of refraction of the glass fibers.

### (B) (Meth)acrylic resin

The (meth)acrylic resin according to the present invention contains a repeat unit represented by Formula 1. 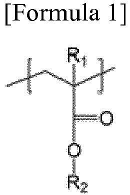 wherein R₁ is a hydrogen atom, a methyl group or an ethyl group; and R₂ is a substituted or unsubstituted C₆ to C₂₀ aryl group, for example, a C₆ to C₉ aryl group. Specifically, R₂ may be a phenyl group, a methylphenyl group, a methylethylphenyl group, a propylphenyl group, a methoxyphenyl group, a cyclohexylphenyl group, a chlorophenyl group, a bromophenyl group, a biphenyl group, or a benzylphenyl group, more specifically a phenyl group, a methylphenyl group, a methylethylphenyl group, a propylphenyl group, a methoxyphenyl group, a chlorophenyl group, or a bromophenyl group, without being limited thereto.

Here, the term "substituted" means that a hydrogen atom in a functional group is substituted with a substituent including a halogen group, a C₁ to C₃₀ alkyl group, a C₁ to C₂₀ haloalkyl group, a C₆ to C₂₀ aryl group, a C₅ to C₃₀ heteroaryl group, a C₁ to C₂₀ alkoxy group, and combinations thereof.

In exemplary embodiments, the (meth) acrylic resin may be a copolymer containing about 1 wt% to about 90 wt%, for example, about 3 wt% to about 50 wt% of the repeat unit represented by Formula 1 and about 10 wt% to about 99 wt%, for example, about 50 wt% to about 97 wt% of a repeat unit represent by Formula 2. Within this range, thermoplastic resin composition can have excellent mechanical strength and the like.

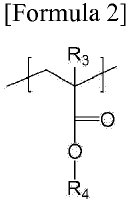

wherein R₃ is a hydrogen atom, a methyl group or an ethyl group; and R₄ is a linear, branched or cyclic C₁ to C₁₀ alkyl group.

In exemplary embodiments, the (meth)acrylic resin may be prepared by a typical polymerization method such as bulk polymerization, emulsion polymerization, or suspension polymerization. For example, the (meth)acrylic resin may be prepared by a preparation method including adding a polymerization initiator to monomers corresponding to the respective repeat units, followed by polymerization. Here, examples of the monomer corresponding to the repeat unit represented by Formula 1 may include phenyl (meth)acrylate, methylphenyl (meth)acrylate, methylethylphenyl (meth)acrylate, propylphenyl (meth)acrylate, methoxyphenyl (meth)acrylate, cyclohexylphenyl (meth)acrylate, chlorophenyl (meth)acrylate, bromophenyl (meth)acrylate, benzylphenyl (meth)acrylate, and biphenyl (meth)acrylate, without being limited thereto, and examples of the monomer corresponding to the repeat unit represented by Formula 2 may include methyl (meth)acrylate, ethyl (meth)acrylate, propyl (meth)acrylate, butyl (meth)acrylate, 2-ethylhexyl (meth)acrylate, cyclohexyl (meth)acrylate, methyl ethacrylate, and ethyl ethacrylate, without being limited thereto.

In exemplary embodiments, the polymerization initiator may be a radical polymerization initiator and the polymerization method may be suspension polymerization in consideration of the index of refraction and the like, wherein suspension polymerization may be carried out in the presence of a suspension stabilizer and a chain transfer agent. That is, the (meth)acrylic resin according to the present invention may be prepared (suspension polymerized) by adding the radical polymerization initiator and the chain transfer agent to the monomers to prepare a reaction mixture and introducing the prepared reaction mixture into an aqueous solution with the suspension stabilizer dissolved therein. Here, additives such as a surfactant, a nucleating agent, a coupling agent, a plasticizer, an impact modifier, a lubricant, an antibacterial agent, a release agent, an antioxidant, a heat stabilizer, a photostabilizer, and a compatibilizer may be further added.

The polymerization initiator may include any typical radical polymerization initiator known in the art, for example, octanoyl peroxide, decanoyl peroxide, lauroyl peroxide, benzoyl peroxide, monochlorobenzoyl peroxide, dichlorobenzoyl peroxide, p-methylbenzoyl peroxide, tert-butyl perbenzoate, azobisisobutyronitrile, and azobis-(2,4-dimethyl)-valeronitrile, without being limited thereto. These may be used alone or as a mixture thereof. The polymerization initiator may be used in an amount of about 0.01 parts by weight to about 10 parts by weight, for example, about 0.02 parts by weight to about 5 parts by weight, based on about 100 parts by weight of the monomers.

The chain transfer agent may be used to adjust the weight average molecular weight of the (meth)acrylic resin and to improve thermal stability. The weight average molecular weight may also be controlled through adjustment of the content of the polymerization initiator in the monomers. However, when polymerization reaction is interrupted by the chain transfer agent, a terminal of a polymer chain has a second carbon structure. Such a terminal has a higher bonding strength than a terminal of a polymer chain containing a double bond, which is generated when the chain transfer agent is not used. Thus, addition of the chain transfer agent can improve thermal stability and ultimately improve optical properties of the (meth)acrylic resin. The chain transfer agent may be any typical chain transfer agent known in the art. For example, the chain transfer agent may include: alkyl mercaptan in the form of CH₃(CH₂)ₙSH (n being an integer of 1 to 20), such as n-butyl mercaptan, n-octyl mercaptan, n-dodecyl mercaptan, t-dodecyl mercaptan, isopropyl mercaptan and n-amyl mercaptan; and aromatic compounds such as α-methyl styrene dimer or α-ethyl styrene dimer, without being limited thereto. These may be used alone or as a mixture thereof. Although the amount of the chain transfer agent may vary depending on the kind thereof, the chain transfer agent may be used in an amount of about 0.01 parts by weight to about 10 parts by weight, for example about 0.02 parts by weight to about 5 parts by weight, based on about 100 parts by weight of the monomers.

In preparation of the (meth)acrylic resin, a typical suspension stabilization aid may be further used together with the suspension stabilizer. Examples of the suspension stabilizer may include organic suspension stabilizers such as polyalkyl acrylate-acrylic acid, polyolefin-maleic acid, polyvinyl alcohol, and cellulose and inorganic suspension stabilizers such as tricalcium phosphate, without being limited thereto. The suspension stabilization aid may include disodium hydrogen phosphate, sodium dihydrogen phosphate, and the like and may be added with sodium sulfate or the like to control solubility of a water-soluble polymer or the monomers.

In preparation of the (meth)acrylic resin, polymerization temperature and polymerization time may be appropriately controlled. For example, the polymerization reaction may be conducted at a polymerization temperature of about 65°C to about 125°C for about 2 to about 8 hours, without being limited thereto. After polymerization is completed, a particulate (meth)acrylic resin can be obtained through cooling, washing, dehydration and drying processes.

In exemplary embodiments, the (meth)acrylic resin may have a weight average molecular weight (Mw) of about 5,000 g/mol to about 300,000 g/mol, for example, about 10,000 g/mol to about 100,000 g/mol, as measured by gel permeation chromatography (GPC). Within this range, the thermoplastic resin composition can have excellent optical properties such as transparency.

In exemplary embodiments, the (meth)acrylic resin may have an index of refraction of about 1.495 to about 1.590, for example, about 1.495 to about 1.55, as measured in accordance with ASTM D542. Within this range, it is possible to obtain a thermoplastic resin composition which has excellent transparency and mechanical strength such as impact resistance and flexural modulus by adjusting a weight ratio of the polycarbonate resin to the (meth)acrylic resin based on the amount and index of refraction of the glass fibers.

In exemplary embodiments, the (meth)acrylic resin may be present in an amount of about 10 parts by weight to about 140 parts by weight, for example about 20 parts by weight to about 140 parts by weight, based on about 100 parts by weight of the polycarbonate resin. If the amount of the (meth)acrylic resin is less than about 10 parts by weight based on about 100 parts by weight of the polycarbonate resin, the thermoplastic resin composition can have poor transparency, whereas if the amount of the (meth)acrylic resin exceeds about 140 parts by weight based on about 100 parts by weight of the polycarbonate resin, the thermoplastic resin composition can have poor impact resistance, mechanical strength, and flame retardancy.

### (C) Aromatic phosphoric acid ester compound

The aromatic phosphoric acid ester compound according to the present invention is a phosphorus flame retardant, which is more eco-friendly than halogen-based flame retardants which can generate halogen gas. The aromatic phosphoric acid ester compound may be a compound represented by Formula 3. 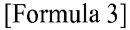 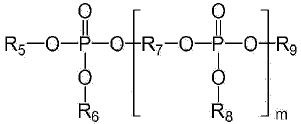 wherein R₅ and R₉ are each independently a substituted or unsubstituted C₆ to C₂₀ aryl group; R₆ and R₈ are each independently a substituted or unsubstituted C₆ to C₂₀ aryl or aryloxy group; R₇ is a derivative (excluding alcohol) of dialcohols of resorcinol, hydroquinone, bisphenol-A, or bisphenol-S; and m is an integer of 0 to 10, for example, 0 to 4.

Examples of the aromatic phosphoric acid ester compound represented by Formula 3 may include diphenyl phenylphosphonate, triphenyl phosphate, tricresyl phosphate, trixylenyl phosphate, tri(2,6-dimethylphenyl)phosphate, tri(2,4,6-trimethylphenyl)phosphate, tri(2,4-ditertiary-butylphenyl)phosphate, tri(2,6-dimethylphenyl)phosphate, when m is 0, and may include bisphenol-A bis(diphenyl phosphate), resorcinol bis(diphenyl phosphate), resorcinol bis[bis(2,6-dimethylphenyl)phosphate], resorcinol bis[bis(2,4-ditertiary butylphenyl)phosphate], hydroquinone bis[bis(2,6-dimethyl phenyl)phosphate], hydroquinone bis[bis(2,4-ditertiary butylphenyl)phosphate], when m is 1, without being limited thereto. These may be used alone or as a mixture thereof.

In exemplary embodiments, the aromatic phosphoric acid ester compound may be present in an amount of about 10 parts by weight to about 80 parts by weight, for example, about 20 parts by weight to about 50 parts by weight, based on about 100 parts by weight of the polycarbonate resin. If the amount of the aromatic phosphoric acid ester compound is less than about 10 parts by weight based on about 100 parts by weight of the polycarbonate resin, the thermoplastic resin composition can have poor flame retardancy, whereas if the amount of the aromatic phosphoric acid ester compound exceeds about 80 parts by weight based on about 100 parts by weight of the polycarbonate resin, the thermoplastic resin composition can be deteriorated in properties other than flame retardancy.

In exemplary embodiments, the aromatic phosphoric acid ester compound may have an index of refraction of about 1.56 to about 1.60, for example, about 1.57 to about 1.59, as measured in accordance with ASTM D542. Within this range, it is possible to obtain a thermoplastic resin composition which has excellent transparency, mechanical strength such as impact resistance and flexural modulus, and flame retardancy.

### (D) Glass fibers

The glass fibers according to the present invention may be any typical commercially available glass fibers and may have an average diameter of about 5 µm to about 20 µm and an average length of about 1.5 mm to about 8 mm. Within thus range, the glass fibers can provide excellent impact modification. In addition, within this range of average length, the glass fibers can be easily introduced into an extruder.

The glass fibers may have a circular, elliptical, rectangular, or dumbbelllike cross section and may have a ratio (a/b) of long diameter (a) to short diameter (b) of about 1.0 to about 1.2 in cross-section, without being limited thereto.

The glass fibers may be treated with a specific glass fiber treatment agent to prevent reaction with a thermoplastic resin such as a polycarbonate resin and to improve a degree of impregnation. Treatment of the glass fiber may be performed during or after fabrication of the fibers. As the glass fiber treatment agent, for example, a lubricant, a coupling agent, and a surfactant may be used. The lubricant is used to form strands, which have a constant diameter and a constant thickness in fabrication of the glass fibers, and the coupling agent serves to provide good adhesion of the glass fibers to a resin. As described above, various glass fiber treatment agents suitably selected depending on the types of resins and glass fibers can help improve physical properties of the resin composition.

In exemplary embodiments, the glass fibers may have an index of refraction of about 1.51 to about 1.59, for example, about 1.52 to about 1.58, specifically about 1.54 to about 1.58. Within this range, it is possible to obtain a thermoplastic resin composition, which has excellent properties in terms of transparency and mechanical strength, such as impact resistance and flexural modulus.

In addition, a difference in index of refraction between the glass fibers and the resin mixture including the polycarbonate resin, the (meth)acrylic resin, and the aromatic phosphoric acid ester compound may be about 0.02 or less, for example, about 0.001 to about 0.010. If the difference in index of refraction between the glass fibers and the resin mixture exceeds about 0.02, the thermoplastic resin composition can have poor transparency.

In exemplary embodiments, the glass fibers may be present in an amount of about 10 parts by weight to about 110 parts by weight, for example, about 20 parts by weight to about 100 parts by weight, specifically about 20 parts by weight to about 70 parts by weight, based on about 100 parts by weight of the polycarbonate resin. If the amount of the glass fibers is less than about 10 parts by weight based on about 100 parts by weight of the polycarbonate resin, the thermoplastic resin composition can have poor impact resistance, flexural modulus, and dimensional stability, whereas if the amount of the glass fibers exceeds about 110 parts by weight based on about 100 parts by weight of the polycarbonate resin, the thermoplastic resin composition can have poor transparency.

In exemplary embodiments, the thermoplastic resin composition according to the present invention may further include additives such as UV stabilizers, fluorescent whitening agents, lubricants, release agents, nucleating agents, antistatic agents, stabilizers, reinforcing agents, and colorants such as pigments or dyes. The UV stabilizer serves to suppress change in color and decrease in reflectivity of the resin composition upon UV irradiation and may include benzotriazole compounds, benzophenone compounds, triazine compounds, and the like. The fluorescent whitening agent serves to improve reflectance of the polycarbonate resin composition and may include stilbene-bis(benzoxazole) derivatives such as 4-(benzoxazole-2-yl)-4'-(5-methyl benzoxazole-2-yl)stilbene or 4,4'-bis(benzoxazole-2-yl)stilbene. In addition, the release agent may be a fluorine-containing polymer, a silicone oil, a metal salt of stearic acid, a metal salt of montanic acid, a montanic ester wax, or a polyethylene wax. The content of the additives may be adjusted depending on the application. For example, the additives may be present in an amount of about 0.0001 parts by weight to about 0.5 parts by weight based on about 100 parts by weight of the polycarbonate resin.

In exemplary embodiments, the thermoplastic resin composition according to the present invention may have a total luminous transmittance of about 80% or higher, for example, about 80% to about 95% and a haze of about 10% or less, for example, about 1% to about 8%, as measured on an about 1.0 mm thick specimen in accordance with ASTM D1003. Within this range, the thermoplastic resin composition can be transparent enough to be used as a transparent exterior material.

The thermoplastic resin composition has excellent mechanical properties such as impact resistance and flexural modulus while having excellent transparency and may have an Izod impact strength of about 3 kgf·cm/cm to about 15 kgf·cm/cm, for example, about 3 kgf·cm/cm to about 8 kgf·cm/cm, as measured on an about 1/8" thick specimen in accordance with ASTM D256 and a flexural modulus of about 40,000 kgf/cm² to about 70,000 kgf/cm², for example, about 40,000 kgf/cm² to about 60,000 kgf/cm², as measured on an about 6.4 mm thick specimen in accordance with ASTM D790.

In addition, the thermoplastic resin composition may have a coefficient of linear thermal expansion (α) of about 20 µm/(m°C) to about 60 µm/(m°C), for example, about 25 µm/(m°C) to about 55 µm/(m°C), as measured in accordance with ASTM D696. Within this range, the thermoplastic resin composition may have a shrinkage rate similar to that of a metal and may be used as a transparent exterior material for electrical/electronic products, such as a transparent television housing.

In accordance with another aspect of the present invention, a molded article is manufactured using the thermoplastic resin composition as set forth above. The thermoplastic resin composition may be prepared by any known method for preparing a thermoplastic resin composition. For example, the above components and, optionally, additives may be mixed, followed by melt extrusion in an extruder, thereby preparing a thermoplastic resin composition in pellet form. The prepared pellets may be produced into various molded articles by any suitable molding method such as injection molding, extrusion, vacuum molding, and casting. Such molding methods are well known to those of ordinary skill in the art to which the present invention pertains. The molded article has excellent properties in terms of transparency and mechanical strength such as impact resistance and flexural modulus and is environmentally friendly because no halogen-based gas is generated therefrom. Thus, the molded article is particularly useful as a transparent exterior material for electric/electronic products such as a transparent television housing.

### [Mode for Invention]

Hereinafter, the present invention will be described in more detail with reference to some examples. It should be understood that these examples are provided for illustration only and are not to be construed in any way as limiting the present invention.

### EXAMPLE

Details of components used in the following Examples and Comparative Examples are as follows:
(A) Polycarbonate resin
   A bisphenol-A polycarbonate resin (weight average molecular weight: 25,000 g/mol, index of refraction: 1.585)
(B) (Meth)acrylic resin
   (B1) A resin represented by Formula 4 and prepared by suspension polymerization of 70 wt% of a methyl methacrylate monomer with 30 wt% of phenyl methacrylate (weight average molecular weight: 35,000 g/mol, index of refraction: 1.515) 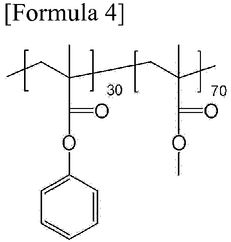
   (B2) Polymethylmethacrylate (PMMA) (IF850, LG MMA, MI (230 °C/3.8 kg): 12 g/10 min, index of refraction: 1.490)
(C) Aromatic phosphoric acid ester compound
   Bisphenol-A bis(diphenyl phosphate) (BDP) (CR-741, DAIHACHI Chemical Industry Co., Ltd.)
(D) Glass fibers
   (D1) 183F available from OCV^{™} Reinforcements (average diameter: 13 µm, average length: 3 mm, index of refraction: 1.554)
   (D2) 910 available from OCV^{™} Reinforcements (average diameter: 13 µm, average length: 3 mm, index of refraction: 1.544)
   (D3) KK03 available from Asahi Fiber Glass (average diameter: 13 µm, average length: 3 mm, index of refraction: 1.578)

### Examples 1 to 6 and Comparative Examples 1 to 7

The above components were added in amounts as listed in Tables 1 and 2, followed by melting, kneading, and extrusion in a twin-screw extruder at 240°C to 280°C, thereby preparing a thermoplastic resin composition in chip form. The thermoplastic resin composition was dried at 80°C for 5 hours or more, followed by injection molding using a screw-type injection machine at 240°C to 280°C, thereby preparing a specimen for property evaluation. The prepared specimen was evaluated as to the following properties. Results are shown in Tables 1 and 2.

### Property evaluation

(1) Transparency: Total luminous transmittance (TT, unit: %) and haze (unit: %) were measured on a 1.0 mm thick specimen using a haze meter (NDH 2000, Nippon Denshoku Inc.) in accordance with ASTM D1003. Here, a higher total luminous transmittance and a lower haze indicate better transparency.
(2) Izod impact strength (unit: kgf·cm/cm): Izod impact strength was measured on a 1/8" thick notched Izod specimen in accordance with ASTM D256.
(3) Flexural modulus (unit: kgf/cm²): Flexural modulus was measured on a 6.4 mm thick specimen in accordance with ASTM D790.
(4) Coefficient of linear thermal expansion (unit: µm/(m°C)): Coefficient of linear thermal expansion was measured on a 6.4 mm thick specimen in accordance with ASTM D696.
(5) Flame retardancy: Flame retardancy was measured on a 0.8 mm thick specimen in accordance with the UL-94 vertical test.

**Table 1**

| | Example 1 | Example 2 | Example 3 | Example 4 | Example 5 | Example 6 |
|---|---|---|---|---|---|---|
| (A) (parts by weight) | 100 | 100 | 100 | 100 | 100 | 100 |
| (B1) (parts by weight) | 80 | 100 | 100 | 100 | 140 | 20 |
| (C) (parts by weight) | 45 | 45 | 35 | 45 | 35 | 60 |
| (D1) (parts by weight) | 45 | 45 | 45 | 35 | - | - |
| (D2) (parts by weight) | - | - | - | - | 45 | - |
| (D3) (parts by weight) | - | - | - | - | - | 45 |
| Index of refraction of Resin mixture ((A)+(B1)+(C)) | 1.558 | 1.556 | 1.556 | 1.556 | 1.547 | 1.575 |
| Index of refraction of glass fiber | 1.554 | 1.554 | 1.554 | 1.554 | 1.544 | 1.578 |
| Difference in index of refraction between resin mixture and glass fiber | 0.004 | 0.002 | 0.002 | 0.002 | 0.003 | 0.003 |
| Total luminous transmittance (%) | 87 | 88 | 87 | 90 | 91 | 88 |
| Haze (%) | 5 | 3 | 4 | 2 | 3 | 3 |
| Izod impact strength (kgf·cm/cm) | 4.3 | 4.5 | 4.2 | 4.0 | 4.8 | 4.2 |
| Flexural modulus (kgf/cm²) | 64,000 | 62,000 | 60,000 | 55,000 | 59,000 | 61,000 |
| Coefficient of linear thermal expansion (µm/(m°C)) | 30 | 30 | 30 | 37 | 32 | 31 |
| Flame retardancy | V-2 | V-2 | V-2 | V-2 | V-2 | V-2 |

**Table 2**

| | | Comp. Example 1 | Comp. Example 2 | Comp. Example 3 | Comp. Example 4 | Comp. Example 5 | Comp. Example 6 | Comp. Example 7 |
|---|---|---|---|---|---|---|---|---|
| (A) (parts by weight) | | 100 | 100 | 100 | 100 | 100 | 100 | 100 |
| (B) (parts by weight) | (B1) | - | 180 | 120 | 30 | 100 | 100 | - |
| | (B2) | - | - | - | - | - | - | 100 |
| (C) (parts by weight) | | 45 | 45 | 5 | 120 | 45 | 45 | 45 |
| (Dl) (parts by weight) | | 45 | 45 | 45 | 45 | - | 150 | 45 |
| Index of refraction of Resin mixture ((A)+(B1)+(C)) | | 1.583 | 1.544 | 1.544 | 1.576 | 1.553 | 1.553 | 1.541 |
| Index of refraction of glass fiber | | 1.554 | 1.554 | 1.554 | 1.554 | - | 1.554 | 1.554 |
| Difference in index of refraction between resin mixture and glass fiber | | 0.029 | 0.01 | 0.01 | 0.022 | 1.553 | 0.001 | 0.013 |
| Total luminous transmittance (%) | | 78 | 87 | 88 | 76 | 90 | 88 | 82 |
| Haze (%) | | 64 | 6 | 7 | 45 | 2.5 | 12 | 25 |
| Izod impact strength (kgf·cm/cm) | | 4.6 | 1.8 | 2 | 2 | 2 | 3 | 2 |
| Flexural modulus (kgf/cm²) | | 62,000 | 48,000 | 53,000 | 65,000 | 18,000 | 80,000 | 48,000 |
| Coefficient of linear thermal expansion (µm/(m°C)) | | 36 | 40 | 39 | 37 | 75 | 25 | 32 |
| Flame retardancy | | V-2 | fail | fail | V-2 | V-2 | Fail | fail |

From the results, it can be seen that the thermoplastic resin composition according to the present invention had excellent properties in terms of transparency, impact resistance, flexural modulus, flame retardancy, and the like. In addition, it can be seen that the thermoplastic resin composition according to the present invention had a coefficient of linear thermal expansion of 30 µm/(m°C) to 37 µm/(m°C), indicative of low shrinkage characteristics, and thus can be used as an exterior material.

Conversely, it can be seen that the thermoplastic resin composition of Comparative Example 1 not using the (meth)acrylic resin had considerably poor transparency and the thermoplastic resin composition of Comparative Example 2 using an excess of the (meth)acrylic resin had considerably poor impact strength and flame retardancy. In addition, it can be seen that the thermoplastic resin composition of Comparative Example 3 using a small amount of the aromatic phosphoric acid ester compound had poor transparency and the thermoplastic resin composition of Comparative Example 4 using an excess of the aromatic phosphoric acid ester compound had poor impact strength. It can be seen that the thermoplastic resin composition of Comparative Example 5 not using the glass fibers had high coefficient of linear thermal expansion and low stiffness and the thermoplastic resin composition of Comparative Example 6 using an excess of the glass fibers had poor transparency and flame retardancy. Further, it can be seen that the thermoplastic resin composition of Comparative Example 7 using polymethyl methacrylate instead of the (meth)acrylic resin according to the present invention had poor haze properties.

It should be understood that various modifications, changes, alterations, and equivalent embodiments can be made by those skilled in the art without departing from the scope of the invention.

## Claims

1. A thermoplastic resin composition comprising:
100 parts by weight of a polycarbonate resin;
10 parts by weight to 140 parts by weight of a (meth)acrylic resin represented by Formula 1;
10 parts by weight to 80 parts by weight of an aromatic phosphoric acid ester compound; and
10 parts by weight to 110 parts by weight of glass fibers, wherein a difference in index of refraction between the glass fibers and a resin mixture comprising the polycarbonate resin, the (meth)acrylic resin, and the aromatic phosphoric acid ester compound is 0.02 or less. 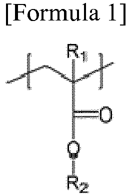
wherein R₁ is a hydrogen atom, a methyl group or an ethyl group and R₂ is a substituted or unsubstituted C₆ to C₂₀ aryl group.

2. The thermoplastic resin composition according to claim 1, wherein the (meth)acrylic resin contains 1 wt% to 90 wt% of a repeat unit represented by Formula 1 and 10 wt% to 99 wt% of a repeat unit represented by Formula 2. 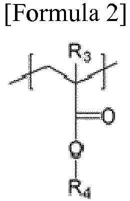 wherein R₃ is a hydrogen atom, a methyl group or an ethyl group and R₄ is a linear, branched or cyclic C₁ to C₁₀ alkyl group.

3. The thermoplastic resin composition according to claim 1, wherein the polycarbonate resin has a weight average molecular weight of 10,000 g/mol to 200,000 g/mol and an index of refraction of 1.57 to 1.60 and the (meth)acrylic resin has a weight average molecular weight of 5,000 g/mol to 300,000 g/mol and an index of refraction 1.495 to 1.590, wherein the weight average molecular weight is measured by gel permeation chromatography, and the index of refraction is measured in accordance with ASTM D542.

4. The thermoplastic resin composition according to claim 1, wherein the aromatic phosphoric acid ester compound is represented by Formula 3. 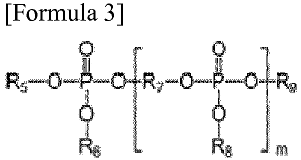 wherein R₅ and R₉ are each independently a substituted or unsubstituted C₆ to C₂₀ aryl group; R₆ and R₈ are each independently a substituted or unsubstituted C₆ to C₂₀ aryl or aryloxy group; R₇ is a derivative (excluding alcohol) of dialcohols of resorcinol, hydroquinone, bisphenol-A, or bisphenol-S; and m is an integer of 0 to 10.

5. The thermoplastic resin composition according to claim 1, wherein the glass fibers have an index of refraction of 1.51 to 1.59.

6. The thermoplastic resin composition according to claim 1, wherein a difference in index of refraction between the resin mixture and the glass fibers ranges from 0.001 to 0.010.

7. The thermoplastic resin composition according to claim 1, wherein the thermoplastic resin composition has a total luminous transmittance of 80% or higher and a haze of 10% or less, as measured on an 1.0 mm thick specimen in accordance with ASTM D1003.

8. The thermoplastic resin composition according to claim 1, wherein the thermoplastic resin composition has an Izod impact strength of 3 kgf·cm/cm to 15 kgf·cm/cm, as measured on an 3.175 mm (1/8") thick specimen in accordance with ASTM D256, a flexural modulus of 40,000 kgf/cm² to 70,000 kgf/cm², as measured on an 6.4 mm thick specimen in accordance with ASTM D790, and a coefficient of linear thermal expansion of 20 µm/(m°C) to 60 µm/(m°C), as measured in accordance with ASTM D696.

9. A molded article formed of the thermoplastic resin composition according to any one of claims 1 to 8.

10. The molded article according to claim 9, wherein the molded article is a transparent exterior material.

## Patentansprüche

1. Thermoplastische Harzzusammensetzung, Folgendes umfassend:
100 Gewichtsanteile eines Polycarbonatharzes;
10 Gewichtsanteile bis 140 Gewichtsanteile eines (meth)acrylischen Harzes, dargestellt von der Formel 1;
10 Gewichtsanteile bis 80 Gewichtsanteile einer aromatischen Phosphorsäurenverbindung; und
10 Gewichtsanteile bis 110 Gewichtsanteile von Glasfasern,
wobei eine Differenz des Brechungsindex zwischen den Glasfasern und einem Harzgemisch, das das Polycarbonatharz, das (meth)acrylische Harz und die aromatische Phosphorsäure-Esterkomponente umfasst, 0,02 oder weniger beträgt. 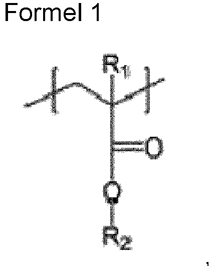
wobei R₁ ein Wasserstoffatom, eine Methylgruppe oder eine Ethylgruppe ist und R₂ eine substituierte oder unsubstituierte C₆- bis C₂₀-Arylgruppe ist.

2. Thermoplastische Harzzusammensetzung nach Anspruch 1, wobei das meth(acrylische) Harz 1 Gew.-% bis 90 Gew.-% einer Wiederholungseinheit umfasst, dargestellt von der Formel 1, und 10 Gew.-% bis 99 Gew.-% einer Wiederholungseinheit, dargestellt von der Formel 2. 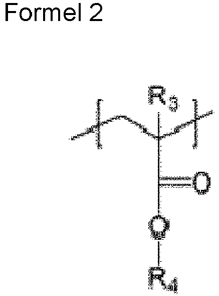 , wobei R₃ ein Wasserstoffatom, eine Methylgruppe oder eine Ethylgruppe ist und R₄ eine lineare, verzweigte oder zyklische C₁- bis C₁₀-Aklylgruppe ist.

3. Thermoplastische Harzzusammensetzung nach Anspruch 1, wobei das Polycarbonatharz ein gewichtsdurchschnittliches Molekulargewicht von 10.000 g/mol bis 200.000 g/mol und einen Brechungsindex von 1,57 bis 1,60 aufweist, und das (meth)acrylische Harz ein gewichtsdurchschnittliches Molekulargewicht von ungefähr 5.000 g/mol bis ungefähr 300.000 g/mol und einen Brechungsindex von 1,495 bis 1,590 aufweist,
wobei das gewichtsdurchschnittliche Molekulargewicht durch Gelpermeationchronomatographie gemessen wird und der Refraktionsindex gemäß ASTM D542 gemessen wird.

4. Thermoplastische Harzzusammensetzung nach Anspruch 1, wobei die aromatische Phosphorsäurezusammensetzung durch die Formel 3 repräsentiert wird. 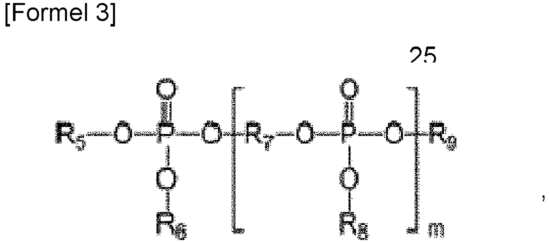 wobei R₅ und R₉ jeweils unabhängig eine substituierte oder unsubstituierte C₆- bis C₂₀-Arypgruppen sind; R₆ und R₈ jeweils unabhängig substituierte oder unsubstituierte C₆- bis C₂₀-Aryl- oder Aryloxygruppen sind; R₇ ein Derivat (Alkohol ausschließend) von Dialkoholen von Resorcin, Hydrochinon, Bisphenol-A oder Bisphenol-S ist; und m eine Ganzzahl von 0 bis 10 ist.

5. Thermoplastische Harzzusammensetzung nach Anspruch 1, wobei die Glasfasern einen Brechungsindex von 1,51 bis 1,59 aufweisen.

6. Thermoplastische Harzzusammensetzung nach Anspruch 1, wobei ein Unterschied des Brechungsindex zwischen dem Harzgemisch und den Glasfasern von 0,001 bis 0,010 reicht.

7. Thermoplastische Harzzusammensetzung nach Anspruch 1, wobei die thermoplastische Harzzusammensetzung eine gesamte Lichttransmission von 80 % oder höher aufweist und eine Trübung von 10 % oder weniger, wie gemessen auf einer 1,0 mm dicken Stichprobe gemäß ASTM D1003.

8. Thermoplastische Harzzusammensetzung nach Anspruch 1, wobei die thermoplastische Harzzusammensetzung eine Izod-Schlagzähigkeit von 3 kgf·cm/cm bis 15 kgf·cm/cm aufweist, wie gemessen auf einer 3,175 mm (1/8") dicken Stichprobe gemäß ASTM D256, ein Biegemodul von 40.000 kgf/cm² bis 70.000 kgf/cm² wie gemessen auf einer 6,4 mm dicken Stichprobe gemäß ASTM D790, und einen Koeffizienten von linearer thermaler Ausdehnung von 20 µm/(m°C) bis 60 µm/(m°C), wie gemessen gemäß ASTM D696.

9. Produkt, geformt aus der thermoplastischen Harzzusammensetzung nach einem der Ansprüche 1 bis 8.

10. Geformtes Produkt nach Anspruch 9, wobei das geformte Produkt ein transparentes Außenmaterial ist.

## Revendications

1. Composition de résine thermoplastique comprenant :
100 parties en poids d'une résine de polycarbonate ;
10 parties en poids à 140 parties en poids d'une résine (méth)acrylique représentée par la Formule 1 ;
10 parties en poids à 80 parties en poids d'un composé d'ester d'acide phosphorique aromatique ; et
10 parties en poids à 110 parties en poids de fibres de verre,
dans laquelle une différence d'indice de réfraction entre les fibres de verre et un mélange de résine comprenant la résine de polycarbonate, la résine (méth)acrylique et le composé d'ester d'acide phosphorique aromatique, est inférieure ou égale à 0,02. 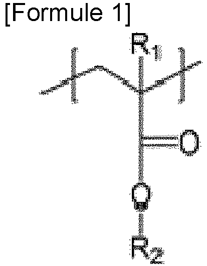
dans laquelle R₁ représente un atome d'hydrogène, un groupe méthyle ou un groupe éthyle et R₂ représente un groupe aryle en C₆ à C₂₀ substitué ou non substitué.

2. Composition de résine thermoplastique selon la revendication 1, dans laquelle la résine (méth)acrylique contient 1% en poids à 90% en poids d'un motif répétitif représenté par la Formule 1 et 10% en poids à 99% en poids d'un motif répétitif représenté par la Formule 2. 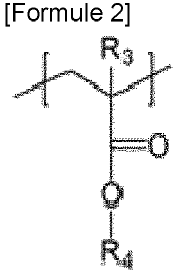 dans laquelle R₃ représente un atome d'hydrogène, un groupe méthyle ou un groupe éthyle et R₄ représente un groupe alkyle en C₁ à C₁₀ linéaire, ramifié ou cyclique.

3. Composition de résine thermoplastique selon la revendication 1, dans laquelle la résine de polycarbonate a un poids moléculaire moyen en poids allant de 10000 g/mol à 200000 g/mol et un indice de réfraction allant de 1,57 à 1,60 et la résine (méth)acrylique a un poids moléculaire moyen en poids allant de 5000 g/mol à 300000 g/mol et un indice de réfraction allant de 1,495 à 1,590, où le poids moléculaire moyen en poids est mesuré par chromatographie par perméation de gel, et l'indice de réfraction est mesuré conformément à la norme ASTM D542.

4. Composition de résine thermoplastique selon la revendication 1, dans laquelle le composé d'ester d'acide phosphorique aromatique est représenté par la Formule 3. 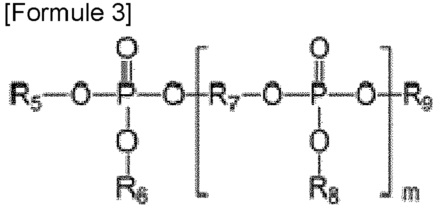 dans laquelle R₅ et R₉ représentent chacun indépendamment un groupe aryle en C₆ à C₂₀ substitué ou non substitué ; R₆ et Rs représentent chacun indépendamment un groupe aryle ou aryloxy en C₆ à C₂₀ substitué ou non substitué ; R₇ représente un dérivé (à l'exclusion de l'alcool) de dialcools de résorcinol, d'hydroquinone, de bisphénol-A ou de bisphénol-S ; et m est un nombre entier allant de 0 à 10.

5. Composition de résine thermoplastique selon la revendication 1, dans laquelle les fibres de verre ont un indice de réfraction allant de 1,51 à 1,59.

6. Composition de résine thermoplastique selon la revendication 1, dans laquelle une différence d'indice de réfraction entre le mélange de résine et les fibres de verre se trouve dans la plage allant de 0,001 à 0,010.

7. Composition de résine thermoplastique selon la revendication 1, dans laquelle la composition de résine thermoplastique a une transmission lumineuse totale supérieure ou égale à 80% et un trouble inférieur ou égal à 10%, tels que mesurés sur un spécimen de 1,0 mm d'épaisseur conformément à la norme ASTM D1003.

8. Composition de résine thermoplastique selon la revendication 1, dans laquelle la composition de résine thermoplastique a une résistance au choc Izod allant de 3 kgf.cm/cm à 15 kgf.cm/cm, telle que mesurée sur un spécimen de 3,175 mm (1/8") d'épaisseur conformément à la norme ASTM D256, un module de flexion allant de 40000 kgf/cm² à 70000 kgf/cm², tel que mesuré sur un spécimen de 6,4 mm d'épaisseur conformément à la norme ASTM D790, et un coefficient de dilatation thermique linéaire allant de 20 µm/(m°C) à 60 µm/(m°C), tel que mesuré conformément à la norme ASTM D696.

9. Article moulé formé de la composition de résine thermoplastique selon l'une quelconque des revendications 1 à 8.

10. Article moulé selon la revendication 9, dans lequel l'article moulé est un matériau extérieur transparent.
